(19) Europäisches Patentamt
European Patent Office
Office européen des brevets

(11) Numéro de publication: 0 202 137 B1

(12) FASCICULE DE BREVET EUROPEEN

(45) Date de publication du fascicule du brevet: 12.07.89

(51) Int. Cl.⁴: E01C 7/36, C09K 17/00

(21) Numéro de dépôt: 86400756.2

(22) Date de dépôt: 09.04.86

(54) **Nouveaux matériaux de travaux publics peu sensibles à l'eau, procédé et compositions chimiques pour les obtenir.**

(30) Priorité: 12.04.85 FR 8505532

(43) Date de publication de la demande: 20.11.86 Bulletin 86/47

(45) Mention de la délivrance du brevet: 12.07.89 Bulletin 89/28

(84) Etats contractants désignés: BE CH DE FR GB IT LI

(56) Documents cités:
EP-A- 0 033 997
FR-A- 1 324 349
GB-A- 1 247 856
US-A- 2 981 162
US-A- 4 163 657

(73) Titulaire: CECA S.A., 22, Place des Vosges, F-92400 Courbevoie(FR)
Titulaire: ETAT FRANCAIS représenté par Le Ministère de l'Urbanisme et du Logement LABORATOIRE CENTRAL DES PONTS ET CHAUSSEES, 58 boulevard Lefebvre, F-75732 Paris Cedex 15(FR)

(72) Inventeur: Biet, Claude, 103, Avenue de la Châtaigneraie, F-92500 Rueil-Malmaison(FR)
Inventeur: Chabert, Didier, 9, Rue Fays, F-94160 Saint-Mandé(FR)
Inventeur: Frouin, Laurent, 3, Square Elmelix, F-94240 L'Hay-les-Roses(FR)
Inventeur: Reymonet, Jean-Louis, 25, Villa Curial, F-75019 Paris(FR)
Inventeur: Tran, Ngoc Lan, 10, Rue Marguerite, F-91330 Yerres(FR)

(74) Mandataire: Boillot, Marc et al, SOCIETE NATIONALE ELF AQUITAINE Division Propriété Industrielle Tour Elf, F-92078 Paris la Défense Cédex 45(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 202 137 B1

## Description

L'invention se rapporte à un nouveau matériau granulaire pour travaux publics, obtenu par traitement chimique en place ou en centrale de sols naturels argileux ou limoneux, à leur mode de traitement et aux compositions chimiques nécessaires à ce traitement.

Les matériaux granulaires naturellement disponibles, sables ou graves, ne présentent de cohésion à l'état sec que lorsqu'ils contiennent des quantités appréciables d'éléments fins et, plus précisément de constituants de granulométrie comprise entre 0,2 et 20 micromètres : les argiles et les limons. En contrepartie, ces liants naturels perdent leur cohésion dès qu'ils sont imbibés d'eau, ce qui limite sévèrement les conditions de leur utilisation pour la construction d'ouvrages devant être exposés aux variations hydrologiques de leur environnement.

Les solutions banales à ces problèmes sont connues de longue date, à savoir l'utilisation de matériaux exempts d'éléments argileux ou limoneux, mais additionnés soit de liants organiques, thermoplastiques (goudrons, bitums, polymères), voire thermodurcissables (résines synthétiques) ; ce sont les mortiers et bétons de tout genre.

Une autre solution, moins radicale, consiste à utiliser les matériaux pourvus de leurs éléments fins, mais en leur appliquant un traitement qui leur confère une résistance acceptable à l'eau. On parle volontiers dans ce cas de stabilisation.

Ces traitements sont basés sur la réactivité des minéraux argileux vis-à-vis de divers composés chimiques, le résultat en étant la constitution d'argiles modifiées dont les caractéristiques physiques, chimiques et géotechniques se trouvent spécifiquement transformées. On préfère les traitements qui mettent en jeu des solutions aqueuses ou des poudres, pour leur simplicité et leur économie. Parmi les agents chimiques auxquels on peut faire appel, on distingue ici plus particulièrement les hydrophobants et les colloïdes hydrophiles.

Les hydrophobants sont essentiellement constitués de cations organiques à longue chaîne hydrocarbonée, comme les amines grasses ou les dérivés d'ammonium quaternaire munis d'une ou plusieurs chaînes comprenant au moins 12 atomes de carbone. Ces produits, tels que la stéarylamine, ou le chlorure de diméthyldistéarylammonium, utilisés à très faible dose, modifient de façon spectaculaire la sensibilité à l'eau des matériaux argileux ou limoneux.
(Voir par exemple J.M. HOOVER et D. T. DAVIDSON, Organic cationic chemical as stabilizing agent for Iowa Loess, Bul. N. 129, Highway Research Board, Chemical and mechanical stabilization).

Mais cette action ne se double d'aucune modification propre de la cohésion naturelle du sol, et le sol hydrophobé, s'il vient à être imbibé, ne présente pas une portance meilleure que celle du même matériau non hydrophobé.

Les polymères organiques hydrosolubles, parmi lesquels on peut citer les lignosulfites, les polyacrylamides hydrolysés, les polynaphtylméthanesulfonates, les carboxyalkylcelluloses, les gommes naturelles... ont été utilisés pour une autre propriété : la floculation des argiles. En technique routière, en dehors des applications aux sols non cohérents dans lequels le polymère joue un simple rôle de liant (voir par exemple la demande européenne EP 0 033 997 pour une telle application de drivés cellulosiques), l'amélioration obtenue est celle de l'indice de consistance, en fait une meilleure portance du sol traité par rapport au sol naturel, pour une même teneur en eau. Cependant ces polymères hydrophiles n'exercent pas par eux-mêmes une action suffisante pour conférer aux matériaux naturels les propriétés de portance que l'on exige pour la réalisation d'ouvrages exposés aux intempéries.

Les demanderesses ont constaté que l'on pouvait obtenir des matériaux tout à fait convenables pour leur insensibilité à l'eau et de ce fait, même utilisables pour la construction d'ouvrages non revêtus, en appliquant aux sables et aux graves argileux et limoneux un traitement mixte, par polymère hydrophile et hydrophobant cationique utilisés à très faibles doses.

Les sols naturels qui peuvent être très substantiellement améliorés par un tel traitement mixte sont par exemple, d'après la classification utilisée dans la Recommandation pour les Terrassements Routiers, Service d'Etudes Techniques des Routes et Autoroutes et Laboratoire Central des Ponts et Chaussées, Janvier 1976, les sols fins des catégories $A_1$ et $A_2$, comprenant les limons peu plastiques, les arènes ; les sols sableux ou graveleux avec fines de la catégorie B, sables et graves silteux à très silteux, sables et graves argileux à très argileux ; les sols comportant des fines et des gros éléments de la catégorie C, argiles à silex, argiles à meulière, éboulis, moraines, roches altérées et alluvions grossières.

Tous ces matériaux sont classés comme sensibles à l'eau, leur sensibilité à l'eau étant assortie d'une réaction très rapide de leur comportement mécanique aux variations de leur environnement hydrique et climatique.

L'un des réactifs de l'invention est constitué par une substance ou un mélange de substances, pris dans le groupe des hydrophobants cationiques. On trouve de tels produits, notamment parmi :

- Les amines grasses à longues chaînes, de formule générale $R_1 R_2 R_3$ N, où l'un des radicaux R au moins est une chaîne hydrocarbonnée, linéaire ou ramifiée, saturée ou insaturée, comprenant de 10 à 24 atomes de carbone, les autres chaîne identiques ou différentes, quand ce ne sont pas des chaînes de ce type, sont des radicaux hydrocarbonés courts, de 1 à 4 carbones, ou l'hydrogène, les substances préférées étant les monoalkylamines primaires comme la laurylamine, l'oléylamine, la stéarylamine, dans leur forme pure ou technique comme l'amine de coprah ou l'amine de suif ou de suif hydrogéné ;

- Les sels hydrosolubles de ces amines, par exemple chlorures, acétates, formiates ;
- Les dérivés d'ammonium quaternaire de formule générale ;

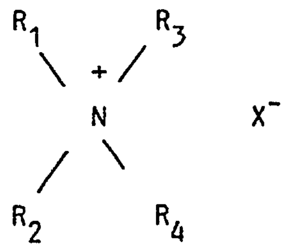

où l'un au moins des radicaux R est une chaîne hydrocarbonée linéaire ou ramifiée, saturée ou insaturée, comprenant de 10 à 24 atomes de carbone ;
où les autres radicaux R, quand ce ne sont pas des chaînes de ce type, sont des radicaux hydrocarbonés courts, identiques ou différents, comprenant de 1 à 4 atomes de carbone ;
où $X^-$ est un anion tel que $Cl^-$, $BR^-$ ou $SO_4\ CH_3^-$;
les substances préférées étant les sels de dialkyldiméthylammonium comme le chlorure de distéaryldiméthylammonium dans sa forme pure ou technique comme le chlorure de disuifdiméthylammonium ou le di(suifhydrogéné)diméthylammonium.

Le second réactif mis en oeuvre dans l'invention, en synergie avec le précédent, est constitué par un polymère hydrophile, et plus précisément par une macromolécule neutre ou anionique. On connait l'existence de phénomènes d'adsorption de telles structures sur les argiles, adsorption fort différente de l'adsorption quasi-irréversible des composés cationiques, monomères ou polymères, et dont le résultat le plus évident est une floculation, c'est-à-dire une agrégation mécanique des particules qui modifie la texture du matériau suivant des modalités et mécanismes décrits par exemple par Michaels A.S., aggregation of suspensions by polyelectrolytes, dans Ind. Eng.Chem. 1954, 46, N°7 pp 1485 ou Heng B.K.G., interaction of clay minerals with organic polymers, some practical applications, dans Clays and clay minerals, 1970, N° 18, pp 357.

On trouve de tels produits, notamment parmi :
- les lignosulfonates,
- les polymères acryliques, polyacrylates, polyméthacrylates, polyacrylamides hydrolysés,
- les alcools polyvinyliques,
- les polymères et copolymères d'oxydes d'alkylènes,
- les celluloses modifiées, hydroxyalkylcelluloses, carboxyalkylcelluloses,
- les polysaccharides hydrosolubles, gommes de guar, alginates, xanthane, carraghénanes, scléroglucane

Il y a une très grande latitude dans le choix de ces polymères hydrophiles pour autant que leur masse molèculaire soit comprise entre 20 000 et 5 000 000, la règle étant que le seuil du minimum acceptable pour la masse moléculaire est d'autant plus bas que le polymère présente un caractère anionique plus pronocé, par exemple 3 000 000 pour une hydroxyéthylcellulose totalement non ionique, et 30 000 pour une carboxyméthylcellulose dont le degré de substitution est de 0,9.

L'obtention de matériaux améliorés par un traitement mixte n'est déjà pas en soi évidente. S'il est en effet connu que l'on peut rendre insensible à l'eau un matériau par un traitement avec un hydrophobant, on est en droit de craindre que la superposition d'un traitement avec un agent hydrophile ne contrarie cet effet. Le brevet américain US 2981162 est sans doute un cas unique de description d'une telle association, restreinte à un traitement mixte cationiquacide polyacrylique, mais l'incompatibilité entre les deux réactifs oblige à opérer le traitement en deux phases séparées, ce qui complique singulièrement l'utilisation pratique du système sur chantier.

Par ailleurs, la bonne pratique des chantiers oblige à une mise en place de tels matériaux, naturels ou modifiés chimiquement, à une teneur en eau optimum qui se trouve délimitée dans un intervalle assez étroit. Cette teneur en eau à l'optimum Proctor, selon le mode opératoire du Laboratoire Central des Ponts et Chaussées, n° S.C.-1-1966 (Dunod), est en général voisine de la teneur en eau naturelle des sols, et en tous cas, plutôt inférieure à la teneur en eau à laquelle ces sols se laissent travailler avec quelque aisance. Dans les cas de très forte humidité naturelle, il peut être nécessaire de procéder à un assèchement chimique par malaxage prálable du sol avec une certaine quantité de chaux vive; dans des conditions moins sévères, on peut avoir recours à l'addition de poudres physiquement avides d'eau comme les cendres volantes, éventuellement associées à des hydrophobants cationiques comme le préconise le brevet français No 1 324 349. Mais dans les circoconstances ordinaires de teneur en eau naturelle des sols, il n'en est pas moins totalement inopportun de leur apporter des quantités d'eau supplémentaires par les solutions de traitement, l'opération immobilisant le chantier jusqu'à ce que par évaporation, la teneur en eau soit revenue à la valeur souhaitée. L'effet sera d'autant plus accusé que l'incorporation des polymères hydrophiles exige des solutions diluées, si on ne veut pas se heurter à d'autres difficultés dues à la distribution ou la pulvérisation de solutions trop visqueuses.

Les demanderesses ont trouvé qu'il était au surplus, particulièrement aisé d'obtenir, dans les conditions ordinaires des chantiers, les matériaux de travaux publics peu sensibles à l'eau de l'invention, en procédant, avant mise en place définitive, au malaxage des sols argileux, ou limoneux avec des compositions pulvérulentes consistant en un mélange d'hydrophobants cationiques et de polymères hydrophiles, tels que définis plus haut, et de poudres minérales. Ces poudres minérales sont avantageusement prises parmi les pulvérulents couramment utilisés en travaux publics, et notamment les fines obtenues par broyages de roches tendres (par exemples calcaires non cristallins) ou dures (par exemple silice, basaltes...). Des fillers bon marchés peuvent être constitués par ceux que l'on sépare des sables primaires de concassage, et qui sont souvent négligés du fait de leur teneur trop importante en éléments argileux.

Dans une forme préférée de l'invention, on utilise des compositions pulvérulentes mixtes obtenus par pulvérisation à chaud en malaxeur de l'hydrophobant cationique, sous forme fondue ou encore de solution concentrée, malaxage et éventuellement rebroyage, puis mélange avec une quantité désirée de polymère hydrophile pris lui-méme dans une présentation pulvérulente. Mais il est bien clair que tout autre mode de préparation de la composition peut être retenu.

Dans les compositions de traitement selon l'invention, l'hydrophobant cationique et le polymère hydrophile sont dans un rapport pondéral compris entre 10/1 et 1/10, et l'ensemble cationique-polymère et la poudre minérale sont dans un rapport pondéral de 2/1 à 1/50.

Les dosages utiles sont tels que la teneur finale des matériaux traités selon l'invention soit de 0,1 à 10 grammes de chacun des réactifs cationique et polymère hydrophile par kilogramme de sol sec. On accorde une grande préférence aux compositions finales contenant environ de 1 gramme d'hydrophobant cationique par kilogramme de sol, la quantité de polymère étant du même ordre de grandeur ; mais on a constaté que dans le cas de matériaux très argileux, généralement assez rebelles au seul traitement cationique, on obtenait des résultats satisfaisants en augmentant de préférence la teneur en polymère. Des essais d'orientation, tels que donnés dans les exemples, permettront à l'homme du métier de choisir très simplement les formulations les mieux adaptées au cas spécifique présenté par le sol à traiter.

Les exemples qui suivent feront mieux comprendre l'invention.

Les exemples I à V montrent plus précisement l'avantage de l'association cationique-polymère pour développer l'insensibilité à l'eau du sol initial. Ils illustrent les essais de laboratoire utiles et fournissent des indications sur la façon d'effectuer les meilleurs choix des composants et de leurs dosages.

Les exemples suivants illustrent les choix préférés de l'invention en ce qu'ils font appel à des additifs pulvérulents.

EXEMPLE I

On reconstitue un matériau de classe $B_2$, par mélange de 90% de sable de Fontainebleau et 10% de kaolin. Ce matériau est caractérisé par sa valeur de bleu de 0,13 (mesure suivant l'essai au bleu de méthylène, selon Bulletin de Liaison des Laboratoires des Ponts et Chaussées, n° 111, janv. février 1981,p 5).

On reconstitue par ailleurs un matériau de classe $A_1$, par mélange de 50% de sable de Fontainebleau et de 50% de kaolin. Ce matériau est caractérisé par une valeur de bleu de 0,50.

On apprécie la sensibilité des matériaux témoins et des matériaux traités, grâce à un essai de remontée capillaire sur couche mince.

Pour réaliser l'essai, on étale une couche mince du matériau sur un support approprié ; après séchage complet, on l'immerge par sa base et on mesure le déplacment du front de mouillage en fonction du temps.

La mesure s'interprète en termes de diffusibilité :

$$D = \frac{\pi}{4} \frac{Z^2}{t}$$

où Z est la hauteur du front de mouillage atteinte au temps t.

On caractérise, de façon plus frappante, le matériau traité en le comparant au matériau non traité qui lui a donné naissance par une fonction de diffusibilité relative

$$D_r = \frac{D_o - D}{D_o}$$

où D est la diffusibilité du matériau selon l'invention et $D_0$ la diffusibilité du matériau initial.

De l'observation du comportement des sols sur chantier et de la confrontation de ces résultats avec ceux que fournit l'essai de remontée capillaire,est issue la règle d'appréciation applicable aux matériaux selon l'invention : on rejette tout système qui, par rapport au sol initial, ne présente pas une diffusibilité relative d'au moins 0,90.

On traite le matériau de type $B_2$ avec 0,1 % en poids d'une carboxyméthylcellulose caractérisée par

une masse moléculaire voisine de 90 000 et un degré de substitution de 0,7, puis par 0,1 % d'une composition hydrophobante à base de stéarylamine, dénommée le Stabiram 677 , commercialisé par la Société CECA S.A.
On traite de la même façon le matériau du type $A_1$ avec 0,5 % en poids de la même carboxyméthylcellulose, et 0,1 % de Stabiram 677.
L'exemple dont les résultats sont donnés ci-après, montre d'une part l'avantage de l'association cationique-polymère, et d'autre part indique comment on peut traiter un matériau fortement argileux avec une formule enrichie en polymère.

| Matériau | Diffusibilité ($m^2 . s^{-1}$) | | $D_r$ |
|---|---|---|---|
| Matériau $B_2$ | Matériau initial | $4070 . 10^{-10}$ | |
| | Matériau témoin avec 0,2% de Stabiram 677 | $1260 . 10^{-10}$ | 0,69 |
| | Matériau témoin traité avec 0,2% de carboxyméthylcellulose (CMC) | $945 . 10^{-10}$ | 0,77 |
| | Matériau obtenu par traitement mixte 0,1% de Stabiram 677 + 0,1% de CMC | $198 . 10^{-10}$ | 0,95 |
| Matériau $A_1$ | Matériau initial | $2790 . 10^{-10}$ | |
| | Matériau obtenu par traitement mixte 0,1% de Stabiram 677 + 0,5% de CMC | $56 . 10^{-10}$ | 0,98 |

EXEMPLE II

On prépare un matériau selon l'invention à partir d'un limon naturel, le limon de Rouen, par traitement de ce matériau avec 0,1% de la carboxyméthylcellulose de l'exemple I, et 0,1% d'hydrophobant commercial (Stabiram 677 ).
La qualité du matériau est estimée grâce au calcul de son indice de consistance d'après les limites d'Atterberg (Mode Opératoire LCPC, S.I. - 4 - 1963, Edition Dunod, ou Norme britannique BS 1377 - 1975, tests 1 à 4),
selon

$$C = \frac{LL - W}{IP}$$

où C est l'indice de consistance calculé, LL la limite de liquidité,
IP l'indice plasticité et W teneur en eau pondérale exprimée par rapport au matériau sec.
On prend ici, une teneur en eau de 30%.
Le contre-exemple est constitué du sol traité, selon l'art antérieur, par l'hydrophobant seul, Stabiram 677 à la dose de 0,2%. On obtient :

| | Limon naturel | Limon simplment hydrophobé | Limon modifié par traitement mixte |
|---|---|---|---|
| LL | 37 | 37 | 48 |
| IP | 14 | 14 | 15 |
| Indice de consistance | 0,5 | 0,5 | 1,2 |

Le matériau issu du traitement mixte est, dans les conditions d'humidité retenues, un sol dur, à l'inverse du matériau d'origine, ou du matériau simplement hydrophobé dont le comportement est à ce titre inchangé.

EXEMPLE III

On procède, à la réalisation de divers matériaux selon l'invention par mise en oeuvre de divers polymères hydrophiles, et divers hydrophobants, à partir du sol, pour les dosages, et selon les critères utilisés dans l'exemple I.
Pour une meilleure compréhension du tableau de résultats, on précise la composition des polymères hydrophiles cités :

- Viscogum HV100T est une gomme de guar (Mero-Rousselot-Satia S.A.)
- Drispac Superlo est une carboxyméthylcellulose (Drilling Specialities Company)
- Natrosol 250 GR est une hydroxyéthylcellulose (Hercules)
- Cecalgum S15 est un alginate (Mero-Rousselot-Satia S.A.)
- Actigum CS11 est un scéroglucane (Mero-Rousselot-Satia S.A.)
- Actigum CX9 est un xanthane (Mero-Rousselot-Satia S.A.)
- Aubygum X23 est un carraghénane (Mero-Rousselot-Satia S.A.)
- Le polyacrylamide N46BT est un polymère partiellement hydrolysé (HOECHST)
- Le polyacrylate HVNA est une forme sodique (HOECHST),

et celle des hydrophobants commerciaux (CECA SA) cités :

- Stabiram 677 (précédemment cité), formulation à base d'acétate de stéarylamine ,
- Noramium M2SH, chlorure de diméthyldi(suifhydrogéné) ammonium,
- Noramac S, acétate de stéarylamine.

| Polymère hydrophile | Hydrophobant | Diffusibilité relative |
|---|---|---|
| Natrosol 250 GR | Stabiram 677 | 0,962 |
| Viscogum | Stabiram 677 | 0,97 |
| Drispac Superlo | Noramium $M_2SH$ | 0,997 |
| Cecalgum S15 | Stabiram 677 | 0,993 |
| Actigum CS11 | Stabiram 677 | 0,97 |
| Actigum CX9 | Stabiram 677 | 0,98 |
| Aubygum X23 | Noramac S | 0,993 |
| Polyacrylamide hydrolysé N46BT | Stabiram 677 | 0,96 |
| Polyacrylate HVNA | Stabiram 677 | 0,97 |

EXEMPLE IV

L'exemple met en évidence l'effet de masse moléculaire du polymère, laquelle constitue l'un des paramètres d'adaptation du produit au cas particulier du sol à traiter.
Le matériau de départ est, comme dans l'exemple I, un sol de classe $B_2$ reconstitué à partir de 90% de sable de Fontainebleau et de 10% de kaolin ; on l'additionne de 0,1% de carboxyméthylcellulose et de 0,1% de Stabiram 677 .
La carboxyméthylcelluse est caractérisée par sa masse moléculaire moyenne Mn et par son degré de substitution D.S., c'est-à-dire le nombre des groupes carboxyméthyles par motif anhydroglucose.
L'efficacité du système est mesurée par l'essai de remontée capillaire. Les masses moléculaires retenues sont celles qui confèrent au matériau selon l'invention une diffusibilité relative $D_r$ au moins égale à 0,95. Elles sont consignées dans le tableau ci-après :

| Degré de substitution D. S. | Masse moléculaire Moyenne Mn |
|---|---|
| 0,9 | 30000 |
| 0,7 | 87500 |
| 0,5 | 220000 |
| 0,3 | 750000 |
| 0,2 | 4000000 |

Exemple V

Le sol argileux est ici traité en une fois, par malaxage avec une solution renfermant à la fois le polymère hydrophile et l'hydrophobant catioique. Ces solutions titrent quelques pourcents en réactifs de façon à conserver une fluidité suffisante pour leur pulvérisation. On les obtient le plus aisément en disposant d'abord le polymère dans l'eau froide ou tiède, puis en ajoutant l'hydrophobant de préférence déjà en solution, et en poursuivant l'agitation jusqu'à homogénéité, et le cas échéant retour à la température ambiante.

L sol $B_2$ est le matériau de l'exemple I.
Le sol $A_1$ est constitué de 50 % de sable de Fontainebleau et de 50 % de kaolin ; c'est un matériau relativement difficile à hydrophober. Le stabiram 677S, le Viscogum HV 100 T, le Natrosol 250 GR désignent les mêmes produits que dans l'exemple III.
Le Rhodoviol 25/140 est un alcool polyvinylique de masse moléculaire voisin de 80 000, commercialisé par Rhône-Poulenc.
Le Polyox WSR 301 est un polyoxyéthylène de masse moléculaire 4 000 000 environ, commercialisé par Union Carbide.
On juge, comme précédemment, de l'efficacité des produits par essai de remontée capillaire

| Sol | Solution aqueuse de traitement | | | | Diffusibilité relative |
|---|---|---|---|---|---|
| | Composition | | Dosage | Viscosité | |
| $A_1$ | Stabiram 677 | 100% | 0,6% | Fluide | 0,56 |
| | Rhodoviol 25/140 | 5% | 12% | Semi-fluide | 0,52 |
| | Stabiram 677S<br>Rhodoviol 25/140 | 1%<br>5% | 10% | Semi-fluide | 0,90 |
| $B_2$ | Stabiram 677<br>Viscogum | 1%<br>1% | 10% | Semi-fluide | 0,99 |
| | Stabiram 677<br>Polyox WSR 301 | 1%<br>1% | 10% | Semi-fluide | 0,97 |
| | Stabiram 677<br>Natrosol 250 GR | 2%<br>2% | 5% | Visqueux | 0,985 |

<u>Exemple VI</u>

Des mélanges pulvérulents selon l'invention ont été fabriqués dans un mélangeur de type Lödige, d'après le mode opératoire suivant :
- introduction des fines dans l'appareil ;
- chauffage à 70-80° C, sous agitation ;
- introduction du produit cationique à l'état fondu, à la même température ;
- poursuite du malaxage durant 30 minutes environ, en maintenant la température à 70-80° C ;
- refroidissement à la température ambiante, puis introduction du polymère ;
- poursuite du mélange pendant encore environ 10 minutes.

On obtient ainsi une poudre prête à l'emploi.
Dans les tableaux ci-dessous, relatant leu efficacité, les termes suivants ont été pris avec les acceptations suivantes.
Pour l'hydrophobant cationique, Noram SH désigne une amine de suif hydrogéné (commercialisées par la société CECA S.A.).
Pour les polymères hydrophiles "PAA" désigne un polyacrylamide hydrolysé à 25% d'un poids moléculaire d'environ 6 $10^6$ (commercialisé par la société Hoechst, sous le non de Bezofloc A31), et "CMC" désigne une carboxyméthylcellulose de masse moléculaire d'environ 130 000 et de degré de substitution 0,7 (commericalisée par la Drilling Specialities Company sous le nom de Drispac Superlo).
Pour les fines, "fines siliceuses" désigne une poudre totalement siliceuse (commercialisée par la société Sika sous le nom de Sikaïsol), " fines calcaire" désigne le Blanc de Meudon Prolabo, et " fines porphyrique" désigne le matériau séparé par tamisage à 200 microns d'un sable de concassage de roches des Carrières de la Meilleraie.
Pour les sols à modifier,"sol $B_2$" désigne un sol recomposé à partir de 90% de sable de Fontainebleau de 10% de kaolin, et dont la valeur de bleu est de 0,1 , "sol $A_2$-limon" désigne un sol naturel de valeur de bleu égale à 2,2, et "sol $A_2$-argile" désigne un sol naturel de valeur de bleu égale à 2,9.
L'efficacité du traitement et la valeur des produits selon l'invention a été controlée par essais de remontée capillaire :

| Sol | Produit de traitement Composition pondérale | | Dosage | Diffusibilité $m^2s^{-1}$ | Diffusibilité relative |
|---|---|---|---|---|---|
| $B_2$ | (témoin) | | | $2200\ 10^{-10}$ | |
| | fines siliceuses | 90% | 2% | $90\ 10^{-10}$ | 0,96 |
| | Noram SH | 5% | | | |
| | PAA | 5% | | | |
| | fines calcaires | 90% | 2% | $28\ 10^{-10}$ | 0,99 |
| | Noram SH | 5% | | | |
| | PAA | 5% | | | |
| | fines porphyriques | 90% | 2% | $57\ 10^{-10}$ | 0,97 |
| | Noram SH | 5% | | | |
| | PAA | 5% | | | |
| $A_2$ | (témoin) | | | $8860\ 10^{-10}$ | |
| Limon | fines calcaires | 70% | 2% | $0,7\ 10^{-10}$ | 0,99 |
| | Noram SH | 5% | | | |
| | CMC | 25% | | | |
| $A_2$ | (témoin) | | | $9580\ 10^{-10}$ | |
| Argile | fines calcaires | 70% | 2% | $5,3\ 10^{-10}$ | 0,99 |
| | Noram SH | 5% | | | |
| | CMC | 25% | | | |

Remarque :

Les dosages en produits de traitement pulvérulents sont des dosages pondéraux exprimés par rapport au sol sec.

Ces résultats témoignent, outre de la remarquable efficacité des pulvérulents selon l'invention, de leur grande commodité pour le choix de la composante minérale, ce choix n'ayant aucune conséquence néfaste sur l'insensibilité à l'eau du matériau traité, et surtout de l'extrême facilité dans le choix des proportions des composants organiques. On notera la possibilité de traitement des sols lourds, comme les sols $A_2$ avec des doses relativement élevées en polymère, traitement autrement non envisageable sur chantier du fait, soit de la trop haute viscosité voire de la gélification des solutions concentrées, soit de l'introduction par des solutions diluées de quantiés d'eau inacceptables.

EXEMPLE VII

On réalise des compositions pulvérulentes destinées au traitement des sols selon l'invention, en mélangeant intimement une carboxyméthylcellulose de masse moléculaire 90 000 et de degré de substitution 0,7 avec des charges aminées disponsibles sur le marché pour d'autres usages notamment pour l'antimassage des engrais.

On utilise ici les Fluidiram KB 200 et Fluidiram KB 30, commercialisés par CECA S.A. qui sont des poudres titrant respectivement 20% et 3% d'amine de suif hydrogéné, pour préparer :

– le Mélange $M_1$:16,7% de carboxyméthylcellulose
83,3% de Fluidiram KB 200,
– le Mélange $M_2$:3% de carboxyméthylcellulose
97% de Fluidiram KB 30

Le sols $B_2$ de l'exemple I, est intimement mélangé avec l'une ou l'autre de ces poudres, et soumis, comme dans l'exemple I, à l'essai de remontée capillaire.

Les résultats suivants décrivent les propriétés du sol traité avec des quantiés de réactifs équivantes à 0,1% de polymère et 0,1% d'hydrophobant cationique libre.

| Diffusibilité ($m^2 . s^{-1}$) | | $D_r$ |
|---|---|---|
| matériau initial | $4440 . 10^{-10}$ | |
| matériau traité avec 0,6% du mélange $M_1$ | $49 . 10^{-10}$ | 0,99 |
| matériau traité avec 3,4% du mélange $M_2$ | $45 . 10^{-10}$ | 0,99 |

Exemple VIII

On a construit un chemin non revêtu par mise en place et compactage mécanique, selon les méthodes habituelles pour ce genre d'ouvrage, d'une épaisseur de 15 cm d'un matériau selon l'invention, constitué d'un sol $A_2$ (45% de limon d'Orly, 55% de sable de Fontainebleau) et de 0,1% de chacun des réactifs de l'exemple I.

Après 3 mois d'exposition aux intempéries et au trafic local estimé environ 500 véhicules par jour, l'état de la chaussée s'avère satisfaisant, confirmé en cela par la mesure de la résistance au poinçonnement selon la méthode dite de l'Aiguille Proctor (Selon mode opératoire ASTM D 1558-71) affichant une valeur de 40 bars.

La section témoin réalisée à partir du matériau naturel d'origine était très dégradée et la résistance au poinçonnement mesurée en place n'était que de 7,2 bars.

Les marques
ACTIGUM - AUBYGUM - BEZOFLOC -
CECALGUM - DRISPAC -
FLUIDIRAM -
NATROSOL - NORAM - NORAMAC -
NORAMIUM -
POLYOX - RHODOVIOL -
SIKAISOL - STABIRAM -
VISCOGUM -
sont des marques déposées (®).

**Revendications**

1. Procédé pour la réalisation de nouveaux matériaux destinés à la construction d'ouvrages de travaux publics, caractérisé en ce qu'il résulte du mélange de matériaux granulaires argileux ou limoneux et d'additifs contenant des polymères hydrosolubles anioniques ou non-ioniques, de masse moléculaire comprise entre 20 000 et 5 000 000, et des hydrophobants cationiques choisis isolément ou en mélange, dans le groupe constitué par les amines possédant au moins une chaîne grasse et leurs sels, et les sels d'ammonium quaternaire possédant au moins une chaîne grasse.

2. Procédé selon la revendication 1, caractérisé en ce que l'additif contenant les polymères hydrophiles et les hydrophobants cationiques est une composition pulvérulente.

3. Procédé selon les revendications 1 et 2 caractérisé en ce que les hydrophobants cationiques sont des amines chosies isolément ou en mélange, dans le groupe comprenant la stéarylamine, l'amine de suif, l'amine de suif hydrogéné, et leurs sels.

4. Procédé selon les revendications 1 et 2 caractérisé en ce que les hydrophobants cationiques sont des sels d'ammonium quaternaire choisis isolément ou en mélange, dans le groupe comprenant les sels de diméthyldistéarylammonium, de diméthyldisuifammonium et de diméthyldi (suif-hydrogéné) ammonium.

5. Procédé selon la revendication 1 caractérisé en ce que les polymères sont choisis isolément ou en mélange, dans un groupe comprenant les lignosulfonates, les polymères et copolymères acryliques, polyacrylates, polyméthacrylates, polyacrylamides plus ou moins hydrolysés, les celluloses modifiées, et notamment les hydroxy et carboxyalkylcelluloses, les polymères et copolymères d'oxydes d'alkylène, les alcools polyvinyliques, et les polysaccharides hydrosolubles, et notamment la gomme guar et le scléroglucane.

6. Procédé selon l'une quelconque des revendications 1 à 6 caractérisé en ce que les quantités de polymères hydrophiles d'une part, et les quantités d'hydrophobants cationiques d'autre part, représentent de 0,01% à 1% du poids du matériau granulaire argileux ou limoneux.

7. Additif pulvérulent pour le traitement des sols argileux et limoneux caractérisé en ce qu'il est constitué de polymères hydrosolubles anioniques ou non-ioniques, de masse moléculaire comprise entre 20 000 et 5 000 000, d'hydrophobants cationiques choisis isolément ou en mélange dans le groupe constitué par les amines possédant au moins une chaîne grasse, leurs sels, et les sels d'ammonium quaternaire possédant au moins une chaîne grasse et de charge minérale, que les polymères hydrophiles et les hydrophobants cationiques y sont présents dans un rapport pondéral compris entre 10/1 et 1/10, et que le rapport pondéral entre l'ensemble de ces composés organiques et la charge minérale est compris entre 2/1 et 1/50.

8. Additif pulvérulent selon la revendication 8, caractérisé en ce que les polymères sont choisis isolément ou en mélange, dans le groupe constitué par les lignonsulfonates, les polymères et copolymères acryliques, polyacrylates, polyméthacrylates, polyacrylamides plus ou moins hydrolysés, les celluloses modifiées, et notamment les hydroxy et carboxyalkylcelluloses, et les polysaccharides hydrosolubles.

## Patentansprüche

1. Verfahren zur Herstellung von neuen Materialien für öffentliche Bauarbeiten, dadurch gekennzeichnet, daß es aus dem Mischen von tonhaltigem oder schlammigem Granulat und Zusätzen besteht, die anionische oder nichtionische wasserlösliche Polymere enthalten, mit einer Molekularmasse zwischen 20 000 und 5 000 000, sowie kationische hydrophobe Substanzen, die einzeln oder gemischt verwendet werden, ausgewählt aus der Gruppe der Amine mit wenigstens einer Fettkette und deren Salze, sowie der quaternären Ammoniumsalze mit wenigstens einer Fettkette.

2. Verfahren nach Anspruch 1, dadurch gekennzeichnet, daß der hydrophile Polymere und kationische hydrophobe Substanzen enthaltende Zusatz eine pulverförmige Zusammensetzung ist.

3. Verfahren nach den Ansprüchen 1 und 2, dadurch gekennzeichnet, daß die kationischen hydrophoben Substanzen Amine sind, die einzeln oder gemischt verwendet werden, ausgewählt aus der Gruppe der Stearylamine, Talgamine, hydrierten Talgamine, und deren Salze.

4. Verfahren nach den Ansprüchen 1 und 2, dadurch gekennzeichnet, daß die kationischen hydrophoben Substanzen quaternäre Ammoniumsalze sind, die einzeln oder gemischt verwendet werden, ausgewählt aus der Gruppe der Dimethyldistearylammoniumsalze, Dimethylditalgammoniumsalze oder Dimethyldi(hydrierter-Talg)ammoniumsalze.

5. Verfahren nach Anspruch 1, dadurch gekennzeichnet, daß die Polymere, die einzeln oder gemischt verwendet werden, ausgewählt sind aus der Gruppe der Lignosulfonate, Acrylpolymere und -copolymere, Polyacrylate, Polymethacrylate, mehr oder weniger hydrolysierte Polyacrylamide, modifizierten Zellulosen, insbesondere Hydroxy- und Carboxyalkylzellulosen, Alkylenoxidpolymere oder -copolymere, Polyvinylalkohole, wasserlöslicher Polysaccharide, insbesondere Guargummi und Skleroglucan.

6. Verfahren nach einem der Ansprüche 1 bis 6, dadurch gekennzeichnet, daß die Mengen der hydrophilen Polymere einerseits, und die Mengen der kationischen hydrophoben Substanzen andererseits 0,01% bis 1% des Gewichts des tonhaltigen oder schlammigen Granulats ausmachen.

7. Pulverförmiger Zusatz zur Behandlung von tonhaltigem und schlammigem Boden, dadurch gekennzeichnet, daß er aus anionischen oder nichtionischen wasserlöslichen Polymeren mit einer Molekularmasse zwischen 20 000 und 5 000 000, kationischen hydrophoben Substanzen, die einzeln oder gemischt verwendet werden, ausgewählt aus der Gruppe der Amine mit wenigstens einer Fettkette, deren Salze, sowie der quaternären Ammoniumsalze mit wenigstens einer Fettkette, und einem mineralischen Füllstoff besteht, und daß die hydrophilen Polymere und die kationischen hydrophoben Substanzen darin in einem Gewichtsverhältnis zwischen 10/1 und 1/10 vorliegen, und daß das Gewichtsverhältnis zwischen der Gesamtheit an organischen Verbindungen und dem mineralischen Füllstoff zwischen 2/1 und 1/50 liegt.

8. Pulverförmiger Zusatz nach Anspruch 8, dadurch gekennzeichnet, daß die Polymere, die einzeln oder gemischt verwendet werden, ausgewählt aus der Gruppe der Lignosulfonate, Acrylpolymere und -copolymere, Polyacrylate, Polymethacrylate, mehr oder weniger hydrolisierte Polyacrylamide, modifizierten Zellulosen, insbesondere Hydroxy- und Carboxyalkylzellulosen und der wasserlöslichen Polysaccharide sind.

## Claims

1. Process for producing new building materials for public works, characterised in that it results from mixing clayey or silty granular materials and additives containing anionic or nonionic water-soluble polymers, with a molecular weight of between 20 000 and 5 000 000 and cationic hydrophobic materials selected individually or as a mixture from the group consisting of amines having at least one fatty chain and salts thereof, and quaternary ammonium salts containing at least one fatty chain.

2. Process according to Claim 1, characterised in that the additive containing the hydrophilic polymers and the cationic hydrophobic materials is a pulverulent compound.

3. Process according to Claims 1 and 2 characterised in that cationic hydrophobic materials are amines selected individually or as a mixture from the group consisting of stearyl amine, tallow amine and hydrogenated tallow amine and salts thereof.

4. Process according to Claims 1 and 2, characterised in that the cationic hydrophobic materials are quaternary ammonium salts selected individually or as a mixture from the group consisting of dimethyl distearyl ammonium salts, dimethyl ditallow ammonium salts and dimethyl (hydrogenated tallow) ammonium salts.

5. Process according to Claim 1, characterised in that the polymers are selected individually or as a mixture from the group consisting of lignosulfonates, acrylic polymers and copolymers, polyacrylates, polymethacrylates, more or less hydrolyzed polyacrylamides, modified celluloses and particularly hydroxy and carboxyalkyl celluloses, alkaline oxide polymers and copolymers, polyvinyl alcohols and water-soluble polysaccharides and particularly guar gum and scleroglucan.

6. Process according to any of Claims 1 to 6, characterised in that the quantities of hydrophylic polymers on the one hand, and the quantities of cationic hydrophobic materials on the other, represent 0.01% to 1 % of the weight of the clayey or silty granular material.

7. Pulverulent additive for the treatment of clayey and silty soils, characterised in that it consists of water-soluble anionic or nonionic polymers having a molecular weight of between 20 000 and 5 000 000 of cationic hydrophobic materials selected individually or as a mixture from the group consisting of amines having at least one fatty chain, salts thereof and quaternary ammonium salts having at least one fatty chain, and mineral filler, and in that the hydrophylic polymers and the cationic hydrophobic materials are present in a weight ratio of between 10/1 and 1/10 and in that the weight ratio between all these organic compounds and the mineral filler is between 2/1 and 1/50.

8. Pulverulent additive according to Claim 8, characterised in that the polymers are selected individually or as a mixture from the group consisting of lignosulfonates, acrylic polymers and copolymers, polyacrylates, polymethacrylates, polyacrylamides hydrolyzed to a greater or lesser extent, modified celluloses and particularly hydroxy and carboxyalkyl celluloses and water-soluble polysaccharides.